(19) Europäisches Patentamt
European Patent Office
Office européen des brevets

(11) **EP 3 940 375 B1**

(12) **EUROPEAN PATENT SPECIFICATION**

(45) Date of publication and mention
of the grant of the patent:
**08.01.2025 Bulletin 2025/02**

(21) Application number: **20774813.8**

(22) Date of filing: **07.02.2020**

(51) International Patent Classification (IPC):
**G01N 23/087** (2018.01)   **G01G 9/00** (2006.01)
**G01N 23/04** (2018.01)

(52) Cooperative Patent Classification (CPC):
**G01G 9/005; G01N 23/087;** G01N 23/04

(86) International application number:
**PCT/JP2020/004939**

(87) International publication number:
**WO 2020/189087 (24.09.2020 Gazette 2020/39)**

(54) **X-RAY INSPECTION DEVICE**

RÖNTGENSTRAHLINSPEKTIONSVORRICHTUNG

DISPOSITIF D'INSPECTION À RAYONS X

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2019 JP 2019048143**

(43) Date of publication of application:
**19.01.2022 Bulletin 2022/03**

(73) Proprietor: **ISHIDA CO., Ltd.**
**Kyoto-shi, Kyoto 606-8392 (JP)**

(72) Inventor: **SUGIMOTO, Kazuyuki**
**Ritto-shi, Shiga 520-3026 (JP)**

(74) Representative: **Global IP Europe**
**Patentanwaltskanzlei**
**Pfarrstraße 14**
**80538 München (DE)**

(56) References cited:
**EP-A1- 3 078 944        JP-A- 2003 139 723
JP-A- 2009 294 209       JP-A- 2010 145 135
JP-A- 2012 141 176       JP-A- 2018 105 697
JP-A- 2018 141 736       JP-A- 2018 155 544
JP-B2- 5 297 206         US-A1- 2003 091 144
US-A1- 2017 023 697**

## Description

## Technical Field

The present disclosure relates to X-ray inspection apparatus.

## Background Art

Conventionally, there is known an apparatus that emits an X-ray onto an article to be inspected and estimates (calculates) the mass of the article based on a detection result (X-ray transmission image) of the X-rays transmitted through the article (for example, see Patent Document 1, 2). Such an apparatus estimates the mass of the article based on the brightness (luminance value or the like) per unit area included in an X-ray transmission image by using the property that a thicker portion of the article is darker in the X-ray transmission image.
EP 3 078 944 A1 discloses an X-ray inspection apparatus comprising: an emitter configured to emit an X-ray onto an article; a detector configured to detect respective X-rays in a plurality of energy bands transmitted through the article; and a generation unit configured to generate respective X-ray transmission images for each energy band based on a detection result of the X-ray for each energy band.

## Citation List

## Patent Document

[Patent Document 1] Japanese Patent No. 5297206
[Patent Document 2] Japanese Patent No. 5148285

## Summary of Invention

## Technical Problem

However, when an article to be inspected contains a plurality of ingredients having different characteristics with respect to X-rays and the ingredient ratio of the article has individual differences (variations), a relatively large error may occur in the mass estimation method. Examples of such articles include articles comprising a fat portion and a flesh (lean) portion, such as Fried Chicken.
Therefore, it is an object of the present disclosure to provide an X-ray inspection apparatus capable of accurately estimating the mass of an article containing a plurality of ingredients having different characteristics with respect to X-rays.

## Solution to Problem

An X-ray inspection apparatus according to a first aspect of the present invention includes: an emitter configured to emit an X-ray onto an article; a detector configured to detect respective X-rays in a plurality of energy bands transmitted through the article; a generation unit configured to generate respective X-ray transmission images for each energy band based on a detection result of the X-ray for each energy band; a first estimation unit configured to obtain respective first estimated values of a mass of the article for each energy band based on the X-ray transmission image for each energy band; and a second estimation unit configured to obtain a second estimated value of the mass of the article based on the first estimated values for each energy band. The second estimation unit is configured to:

obtain a correction amount for the first estimated value corresponding to one energy band of the plurality of energy bands on the basis of a parameter based on a comparison between the first estimated values for each energy band; and
correct the first estimated value corresponding to the one energy band based on the correction amount to obtain the second estimated value.

Even if the first estimated values for one energy band match between two articles, a situation may arise in which the first estimated value is a highly accurate estimated value for one article (i.e., a value that deviates relatively little from the true mass value of the one article), while the first estimated value is a less accurate estimated value for the other article (i.e., a value that deviates relatively much from the true mass value of the other article). This is because there is an individual difference between the two articles for the ratio of a plurality of ingredients having different characteristics with respect to X-rays. Therefore, in order to accurately estimate the mass of such an article, it is necessary to consider the ratio of a plurality of ingredients contained in the article. However, information on the ratio of a plurality of ingredients contained in an article cannot be obtained only from the first estimated value for one energy band. On the other hand, a difference corresponding to the ratio of the ingredients of the article occurs between the first estimated values of the plurality of energy bands. This is because there is a difference in the X-ray absorption rate of each energy band among a plurality of ingredients having different characteristics with respect to X-rays.
Therefore, the X-ray inspection apparatus obtains the respective first estimated values of the mass of the article for each energy band based on the X-ray transmission image obtained for each of the plurality of energy bands. The X-ray inspection apparatus obtains a second estimated value of the mass of the article based on the first estimated values of the plurality of energy bands. Accordingly, an estimated value (second estimated value) in which a ratio of the plurality of ingredients included in the article is indirectly considered based on the first estimated values for the plurality of energy bands is obtained as a final estimated value. Therefore, according to the X-ray inspection apparatus, it is possible to accurately estimate the mass of an article containing a plurality of ingredients having different characteristics with respect to X-rays.

The second estimation unit obtains a correction amount for the first estimated value corresponding to one energy band of the plurality of energy bands on the basis of a parameter based on a comparison between the first estimated values for each energy band, and corrects the first estimated value corresponding to the one energy band based on the correction amount to obtain the second estimated value. Accordingly, the mass of the article can be accurately estimated based on the correlation between the parameter based on the comparison between the first estimated values for each energy band and the error from the true mass value of the article of the first estimated value corresponding to the one energy band.

The second estimation unit may obtain, as the correction amount, an appropriate correction amount corresponding to a parameter that is based on the comparison between the first estimated values for each energy band by using a relational information defining a relationship between the parameter and the appropriate correction amount. This makes it possible to easily obtain a final estimated value (second estimated value) of the mass of the article by using the relational information prepared in advance.

The relational information may be a learned model generated by machine learning using training data including a parameter that is based on a comparison between the first estimated values for each energy band for each of a plurality of samples that are articles of the same type as the article and an appropriate correction amount. The second estimation unit may be configured to obtain, as the correction amount, an estimated value of the appropriate correction amount output from the relational information by inputting a parameter that is based on a comparison between the first estimated values for each energy band to the relational information. Accordingly, by using, as relational information, a learned model prepared in advance based on training data for a plurality of samples that are articles of the same type as the article to be inspected, it is possible to easily and accurately obtain a final estimated value (second estimated value) of the mass of the article.

An X-ray inspection apparatus according to a second aspect of the present invention includes: an emitter configured to emit an X-ray onto an article; a detector configured to detect respective X-rays in a plurality of energy bands transmitted through the article; a generation unit configured to generate respective X-ray transmission images for each energy band based on a detection result of the X-ray for each energy band; a first estimation unit configured to obtain respective first estimated values of a mass of the article for each energy band based on the X-ray transmission image for each energy band; and a second estimation unit configured to obtain a second estimated value of the mass of the article based on the first estimated values for each energy band. The second estimation unit is configured to obtain, as the second estimated value, an estimated value of the mass of the article output from an estimation model by inputting the first estimated value for each energy band to the estimation model. The estimation model is a learned model generated by machine learning using training data including the first estimated value for each energy band and the mass value of the sample for each of a plurality of samples that are the articles of the same type as the article. Accordingly, a final estimated value (second estimated value) of the mass of the article can be easily obtained only by inputting a plurality of first estimated values obtained for each energy band to the estimation model.

Any one of the X-ray inspection apparatuses mentioned above may further include a determination unit configured to determine whether the second estimated value is within a predetermined proper range. This makes it possible to determine the quality of the article based on the final estimated value (second estimated value) of the mass of the article. Such a determination result can be suitably used for, for example, sorting of articles (for example, excluding an article whose second estimated value is determined not to be within a proper range) in a subsequent step.

Any one of the X-ray inspection apparatuses mentioned above may further include a recognition unit configured to distinguish and recognize a plurality of articles by labeling processing when the X-ray transmission image includes the plurality of articles. The first estimation unit may be configured to obtain the first estimated value for each article. The second estimation unit may be configured to obtain the second estimated value for each article. Accordingly, in a case where a plurality of articles are included in the X-ray transmission image, the mass of each article can be accurately estimated.

**Advantageous Effects of Invention**

According to the present disclosure, it is possible to provide an X-ray inspection apparatus capable of accurately estimating the mass of an article containing a plurality of ingredients having different characteristics with respect to X-rays.

**Brief Description of Drawings**

FIG. 1 is a configuration diagram of an X-ray inspection apparatus according to an embodiment.

FIG. 2 is a block diagram of the inside of the shield box shown in FIG. 1.

FIG. 3 is a functional configuration diagram of a controller.

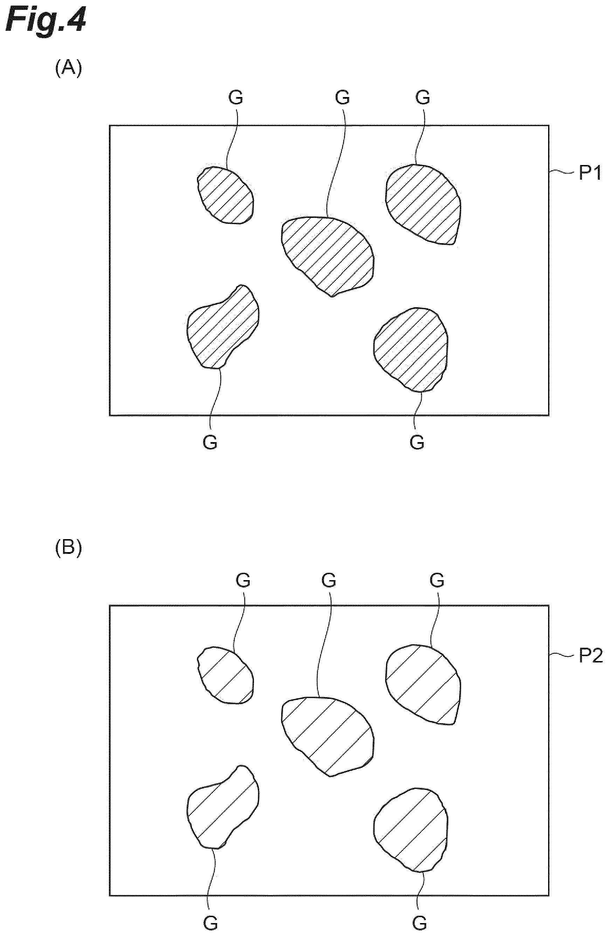

(A) of FIG. 4 shows an example of a low energy image, and (B) of FIG. 4 shows an example of a high energy image.

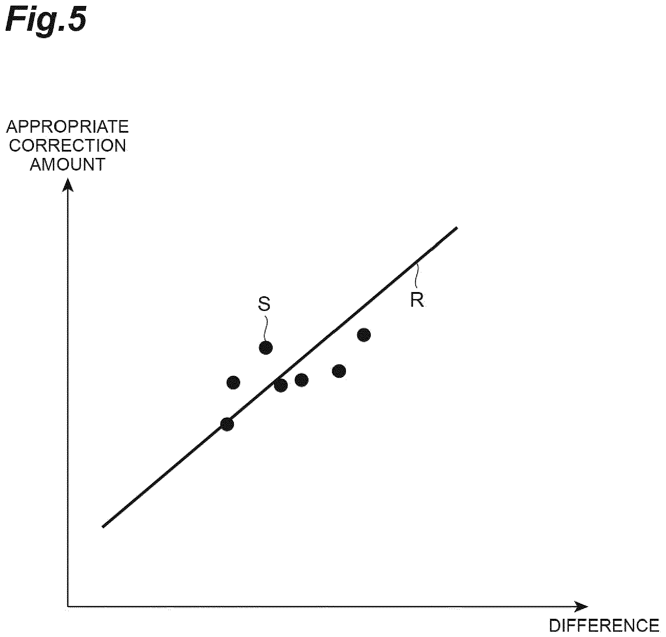

FIG. 5 is a diagram illustrating an example of relational information obtained by linear regression.

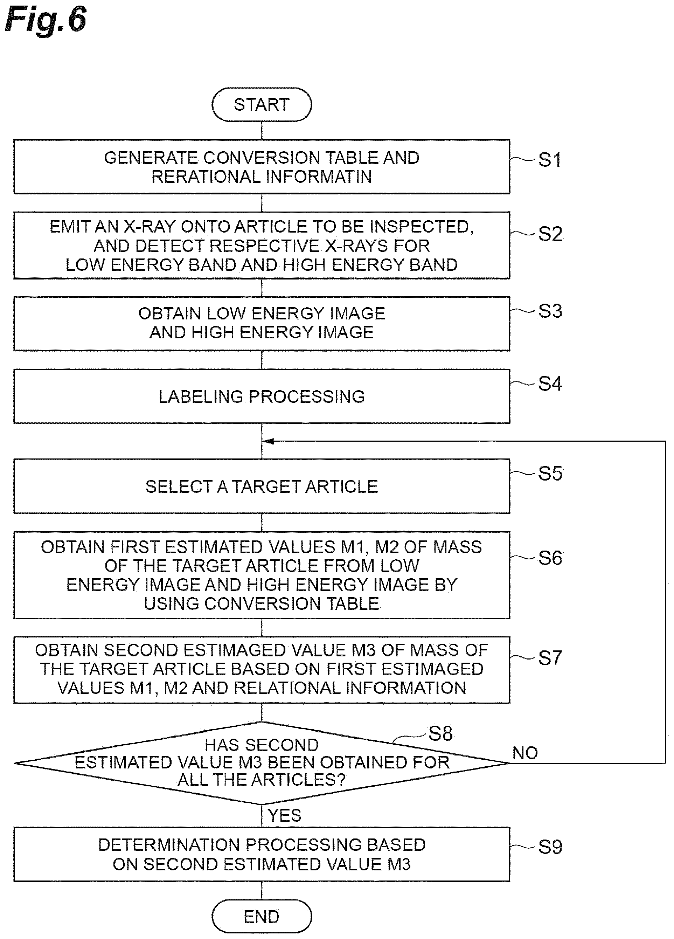

FIG. 6 is a flowchart showing an example of the operation of the X-ray inspection apparatus.

**Description of Embodiments**

Hereinafter, embodiments of the present disclosure will be described with reference to the drawings. In the drawings, the same or corresponding portions are denoted by the same reference numerals, and redundant description is omitted.

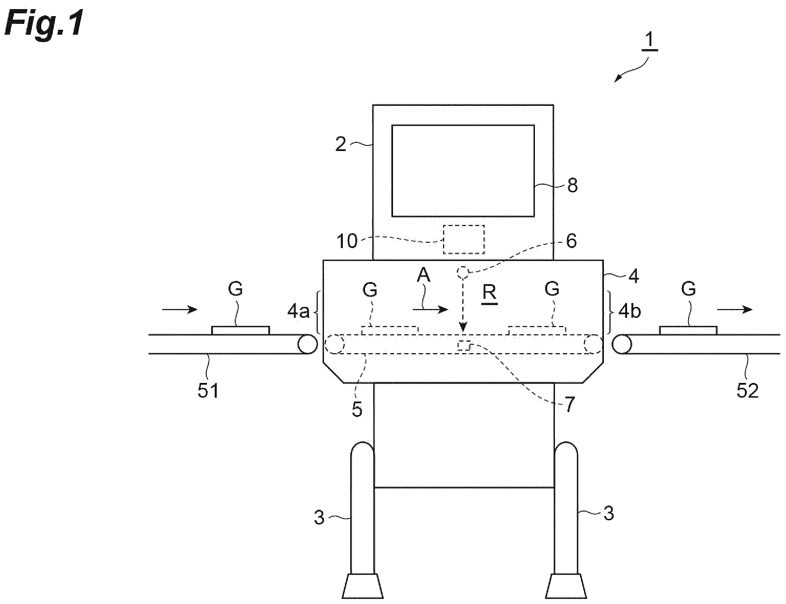

As shown in FIG. 1, the X-ray inspection apparatus 1 includes an apparatus body 2, support legs 3, a shield box 4, a conveyance unit 5, an X-ray emitter 6 (emitter), an X-ray detector 7 (detector), a display-operation unit 8, and a controller 10. The X-ray inspection apparatus 1 generates an X-ray transmission image of an article G while conveying the article G, and performs an inspection of the article G (for example, a storage number inspection, a foreign substance contamination inspection, a missing article inspection, a crack and chip inspection, or the like) based on the X-ray transmission image. An article G before inspection is carried into the X-ray inspection apparatus 1 by the carry-in conveyor 51. An article G after inspection is carried out of the X-ray inspection apparatus 1 by the carry-out conveyor 52. An article G that has been determined to be a defective product by the X-ray inspection apparatus 1 is sorted out of the production line by a sorting device (not illustrated) disposed downstream of the carry-out conveyor 52. An article G that has been determined to be a non-defective-product by the X-ray inspection apparatus 1 pass through the sorting device without being processed.

The apparatus body 2 accommodates the controller 10 and the like. The support legs 3 support the apparatus body 2. The shield box 4 is provided in the apparatus main body 2. The shield box 4 prevents leakage of X-rays to the outside. An inspection region R in which an inspection of the article G by X-ray is performed is provided inside the shield box 4. A carry-in port 4a and a carry-out port 4b are formed in the shield box 4. The article G before inspection is carried into the inspection region R from the carry-in conveyor 51 through the carry-in port 4a. The article G after inspection is carried out from the inspection region R to the carry-out conveyor 52 through the carry-out port 4b. Each of the carry-in port 4a and the carry-out port 4b is provided with an X-ray blocking curtain (not illustrated) for preventing leakage of X-rays.

The conveyance unit 5 is disposed in the shield box 4. The conveyance unit 5 conveys the article G along the conveying direction A from the carry-in port 4a to the carry-out port 4b via the inspection region R. The conveyance unit 5 is, for example, a belt conveyor stretched between a carry-in port 4a and a carry-out port 4b.

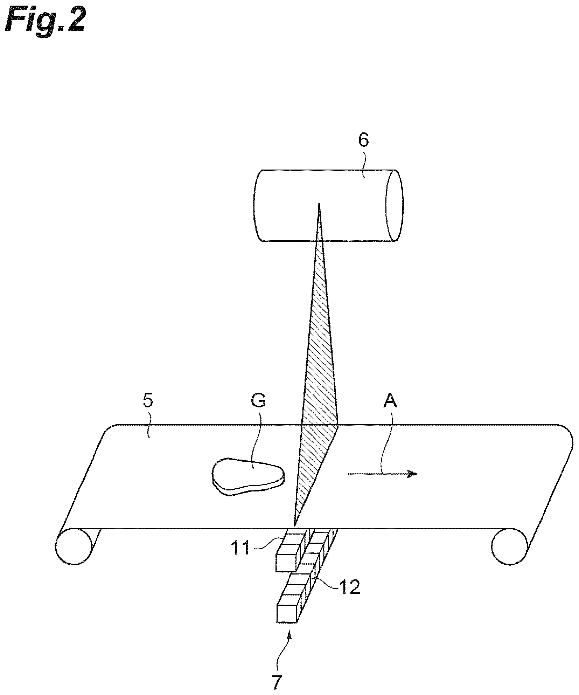

As shown in FIGS. 1 and 2, the X-ray emitter 6 is disposed in the shield box 4. The X-ray emitter 6 emits an X-ray onto the article G conveyed by the conveyance unit 5. The X-ray emitter 6 includes, for example, an X-ray tube configured to emit the X-ray and a collimator configured to spread the X-ray emitted from the X-ray tube in a fan shape in a plane perpendicular to the conveying direction A. The X-ray emitted from the X-ray emitter 6 includes X-rays of various energy bands from low energy (long wavelength) to high energy (short wavelength). Note that "low" and "high" in the low energy band and the high energy band described above indicate relatively "low" and "high" among a plurality of energy bands emitted from the X-ray emitter 6, and do not indicate a specific range.

The X-ray detector 7 is disposed in the shield box 4. The X-ray detector 7 detects respective X-rays in a plurality of energy bands transmitted through the article G. In the present embodiment, the X-ray detector 7 is configured to detect an X-ray in the low energy band and an X-ray in the high energy band. That is, the X-ray detector 7 includes a first line sensor 11 and a second line sensor 12. Each of the first line sensor 11 and the second line sensor 12 is constituted by X-ray detection elements arranged linearly along a horizontal direction perpendicular to the conveying direction A. The first line sensor 11 detects the X-ray in the low energy band transmitted through the article G and the conveyance belt of the conveyance unit 5. The second line sensor 12 detects the X-ray in the high energy band transmitted through the article G, the conveyance belt of the conveyance unit 5, and the first line sensor 11.

As shown in FIG. 1, the display-operation unit 8 is provided in the apparatus main body 2. The display-operation unit 8 displays various types of information and receives inputs of various conditions. The display-operation unit 8 is, for example, a liquid crystal display, and displays an operation screen as a touch panel. In this case, an operator can input various conditions with the display-operation unit 8.

The controller 10 is disposed in the apparatus main body 2. The controller 10 controls operations of respective components of the X-ray inspection apparatus 1. The controller 10 includes a central processing unit (CPU), a read only memory (ROM), a random access memory (RAM), and the like. To the controller 10, a detection result of the X-ray in the low energy band is input from the first line sensor 11 of the X-ray detector 7, and a detection result of the X-ray in the high energy band is input from the second line sensor 12 of the X-ray detector 7.

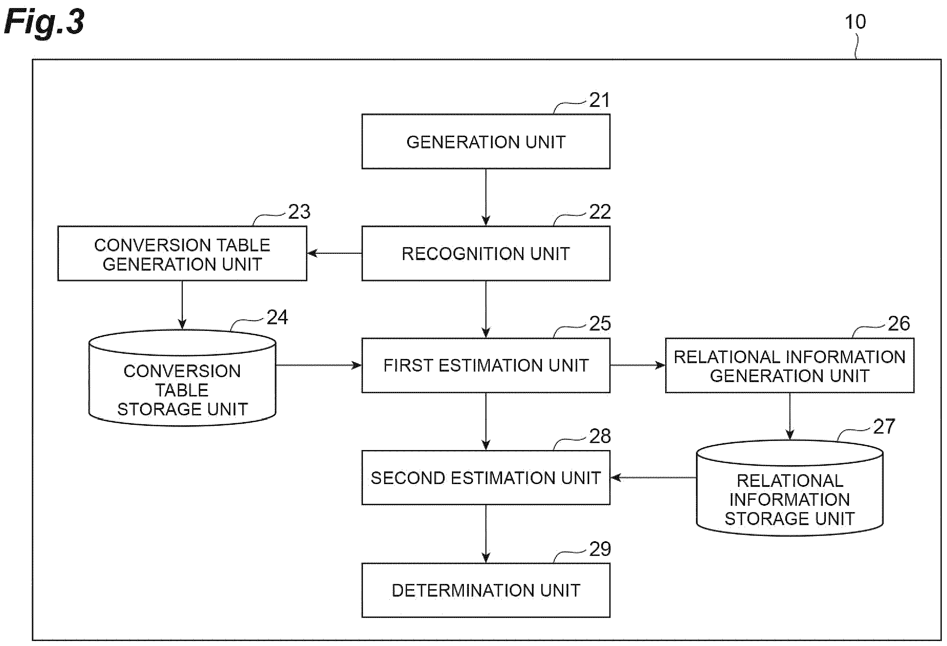

As shown in FIG. 3, the controller 10 includes a generation unit 21, a recognition unit 22, a conversion table generation unit 23, a conversion table storage unit 24, a first estimation unit 25, a relational information generation unit 26, a relational information storage unit 27, a second estimation unit 28, and a determination unit 29.

The generation unit 21 generates respective X-ray transmission images for each energy band based on the detection result of the X-ray for each energy band. In the present embodiment, the generation unit 21 generates an X-ray transmission image (hereinafter, "low energy image") for the low energy band based on the detection result of the X-ray in the low energy band by the first line sensor 11 of the X-ray detector 7. The generation unit 21 generates an X-ray transmission image (hereinafter, "high energy image") for the high energy band based on the detection result of the X-ray in the high energy band by the second line sensor 12 of the X-ray detector 7.

In this embodiment, as shown in FIG. 2, the X-ray emitted from the X-ray emitter 6 are emitted in a fan shape, and the distance from the X-ray emitter 6 to the first line sensor 11 is different from the distance from the X-ray emitter 6 to the second line sensor 12. Therefore, the size of the article G in the low energy image is different from the size of the article G in the high energy image. Specifically, article G in the high energy image is slightly larger than article G in the low energy image. Therefore, the generation unit 21 may perform a process of matching the scales of the low energy image and the high energy image based on the ratio (L2/L1) of the distance (L1) from the X-ray emitter 6 to the first line sensor 11 and the distance (L2) from the X-ray emitter 6 to the second line sensor 12. For example, the generation unit 21 may enlarge the low energy image by the above ratio or may reduce the high energy image by the reciprocal of the above ratio (L1/L2).

(A) of FIG. 4 shows an example of the low energy image P1 generated by the above-described processing of the generation unit 1, and (B) of FIG. 4 shows an example of the high energy image P2 generated by the above-described processing of the generation unit 2. The low energy image P1 has a relatively high contrast and is dark as a whole. On the other hand, the high energy image P2 has a relatively low contrast and is bright as a whole. In the present embodiment, one X-ray transmission image (low energy image P1 or high energy image P2) includes a plurality of articles G (five articles G in this example). For example, in a case where a plurality of articles G packed in a bag is caused to flow through the X-ray inspection apparatus 1 as an inspection target, one X-ray transmission image includes a plurality of articles G.

When a plurality of articles G are included in the X-ray transmission image, the recognition unit 22 distinguishes and recognizes the plurality of articles G by labeling processing. A known algorithm can be used for the labeling processing. For example, the labeling processing is performed as follows. That is, the recognition unit 22 binarizes the luminance value of each pixel of one of the low energy image P1 and the high energy image P2 (for example, the low energy image P1) by using a predetermined threshold value. Thus, in the low energy image P1, only the range occupied by the article G is converted into a value corresponding to white (or black). Then, the recognition unit 22 performs a process of assigning the same number to pixels in which white (or black) portions are continuous. Then, the recognition unit 22 recognizes the range occupied by the article G in the high energy image P2 by superimposing the high energy image P2 and the low energy image P1 in which the region occupied by the article G has been recognized. Accordingly, in the example of FIG. 4, the recognition unit 22 recognizes a plurality of (here, five) articles G as different articles G (that is, articles to which different numbers are assigned) in the low energy image P1 and the high energy image P2. Even when only one article G is included in the X-ray transmission image, the range (pixels) occupied by the article G in the X-ray transmission image is specified by the above-described processing of the recognition unit 22.

The conversion table generation unit 23 generates respective conversion tables for each of the low energy image P1 and the high energy image P2. The conversion table $m1(a)$ for the low energy image P1 is information for calculating the estimated mass $m1$ for each unit region (1 pixel) from the brightness "a" (luminance value) of each pixel corresponding to the article G in the low energy image P1. On the other hand, the conversion table $m2(a)$ for the high energy image P2 is information for calculating the estimated mass $m2$ for each unit region (1 pixel) from the brightness "a" (luminance value) of each pixel corresponding to the article G in the high energy image P2. An example of generating conversion table $m(a)$ for an X-ray transmission image (low energy image P1 or high energy image P2) will be described below. In the following description, conversion table $m(a)$ generated when "X-ray transmission image" is read as "low energy image P1" corresponds to conversion table $m1(a)$ for low energy image P1, and conversion table $m(a)$ generated when "X-ray transmission image" is read as "high energy image P2" corresponds to conversion table $m2(a)$ for high energy image P2.

First, the conversion table generation unit 23 uses the functions of the generation unit 21 and the recognition unit 22 described above to obtain X-ray transmission images of a plurality of (for example, 10) articles (articles of the same type as the article G to be inspected) whose masses are known in advance.

Subsequently, the conversion table generation unit 23 generates conversion table $m(a)$ based on the following expression (1) for calculating the estimated mass $m$ in each unit region (1 pixel) corresponding to the article from the brightness $a$ of the each unit region in the X-ray transmission image obtained as described above.

$$m(a) = ct = -c/\mu \times \ln(I/a) = -\alpha \ln(I/a)\ldots(1)$$

Here, "m" is the estimated mass, "c" is a coefficient for converting the thickness of the article into the mass, "t" is the thickness of the article, "I" is the brightness without the article, and "μ" is the linear absorption coefficient.

The conversion table generation unit 23 compares the actual mass of each of the 10 articles input through, for example, the display-operation unit 8 with the total estimated mass obtained by summing the estimated masses of the respective unit regions obtained by the conversion table, and adjusts the conversion table so that the total estimated mass is close to the actual mass. A known method (for example, a method described in Japanese Patent No. 5297206) can be used to adjust the conversion table.

The conversion table m1(a) for the low energy image P1 and the conversion table m2(a) for the high energy image P2 generated by the conversion table generation unit 23 are stored in the conversion table storage unit 24 so as to be referable from the first estimation unit 25 described later.

The first estimation unit 25 obtains respective first estimated values of the mass of the article G for each energy band based on the X-ray transmission image for each energy band. In the present embodiment, on the basis of the low energy image P1, the first estimation unit 25 obtains a first estimated value M1 of the mass of the article G based on the low energy band. On the basis of the high energy image P2, the first estimation unit 25 obtains a first estimated value M2 of the mass of the article G based on the high energy band. When a plurality of articles G are included in the X-ray transmission image as in the example of FIG. 4, the first estimation unit 25 obtains the first estimated values M1 and M2 individually for each article G by referring to the result of the labeling processing of the recognition unit 22. That is, the first estimation unit 25 repeats a process of selecting one article G to be estimated (hereinafter, "target article") and obtaining the first estimated values M1 and M2 of the target article until the first estimated values M1 and M2 of the plurality of articles G are obtained. Hereinafter, a process of obtaining the first estimated values M1 and M2 of the target article will be described.

The first estimation unit 25 obtains the first estimated value M1 of the target article as follows. First, the first estimation unit 25 extracts pixels included in a region occupied by the target article in the low energy image P1 (that is, pixels to which a number corresponding to the target article is assigned) by referring to the result of the labeling processing of the recognition unit 22. Then, the first estimation unit 25 obtains the estimated mass for each pixel by substituting the brightness "a" of the pixel into the conversion table m1(a) stored in the conversion table storage unit 24 for each extracted pixel. Then, the first estimation unit 25 obtains the first estimated value M1 of the target article by summing up the estimated mass of each pixel obtained in this manner.

The first estimation unit 25 obtains the first estimated value M2 of the target article as follows. First, the first estimation unit 25 extracts pixels included in a region occupied by the target article in the high energy image P2 (that is, pixels to which a number corresponding to the target article is assigned) by referring to the result of the labeling processing of the recognition unit 22. Then, the first estimation unit 25 obtains the estimated mass for each pixel by substituting the brightness "a" of the pixel into the conversion table m2(a) stored in the conversion table storage unit 24 for each extracted pixel. Then, the first estimation unit 25 obtains the first estimated value M2 of the target article by summing up the estimated mass of each pixel obtained in this manner.

Here, a case will be considered in which the article G to be inspected contains a plurality of ingredients having different characteristics with respect to X-rays (for example, X-ray absorptance for each energy band). Specific examples of such an article G include an article (for example, a Fried Chicken or the like) including a plurality of portions (for example, a flesh portion, a skin portion, a coating portion, or the like) having different X-ray characteristics. As a result of diligent research on a method of simply and accurately estimating the mass of the article G in such a case, the present inventors have obtained the following findings.

Two articles G (hereinafter, referred to as "article G1" and "article G2") are prepared. Even if the first estimated value (first estimated value M1 or first estimated value M2) of one energy band (in this embodiment, low energy band or high energy band) matches between articles G1 and G2, the first estimated value may be a highly accurate estimated value (i.e., a value relatively small in deviation from the true mass value of one article G1) for one article G1 and a less accurate estimated value (i.e., a value relatively large in deviation from the true mass value of the other article G2) for the other article G2. This is because there is an individual difference between the two articles G1 and G2 for the ratio of a plurality of ingredients having different characteristics with respect to X-rays (hereinafter, simply referred to as "ingredient ratio"). That is, in the above example, the ingredient ratio of the article G1 is an ingredient ratio that can be accurately estimated by the estimation process based on one energy band by the first estimation unit 25, whereas the ingredient ratio of the article G2 is not an ingredient ratio that can be accurately estimated by the estimation process based on one energy band by the first estimation unit 25. Thus, an error E corresponding to the ingredient ratio of the article G occurs between the first estimated value of the article G and the true mass value of the article G for one energy band.

Therefore, in order to accurately estimate the mass of the article G, it is necessary to consider the ingredient ratio of the article G. However, information on the ingredient ratio of the article G cannot be obtained only from the first estimated value for one energy band. On the other hand, a difference corresponding to the ingredient ratio of the article G occurs between the first estimated values of the article G for each of the plurality of energy bands (in the present embodiment, between the first estimated value M1 for the low energy band and the first estimated value M2 for the high energy band). This is because there is a difference in the X-ray absorption rate of each energy band among a plurality of ingredients having different X-ray characteristics.

In summary, the error E occurs according to the ingredient ratio of the article G. That is, there is a correlation between the error E and the ingredient ratio of the article G. In addition, a difference between the first estimated values for each of the plurality of energy bands may also be generated according to the ingredient ratio of the article G. That is, there is also a correlation between the ingredient ratio of the article G and the difference between the first estimated values for each of the plurality of energy bands. Therefore, it can be said that there is a correlation between the error E and the difference between the first estimated values of the plurality of energy bands.

Based on the above findings, the X-ray inspection apparatus 1 is configured to obtain a more accurate estimated value (second estimated value M3) of the mass of the article G by correcting the estimated value (first estimated value M1 or first estimated value M2) of the article G based on the difference (a parameter based on a comparison) between the first estimated value M1 and the first estimated value M2. That is, the X-ray inspection apparatus 1 includes a relational information generation unit 26, a relational information storage unit 27, and a second estimation unit 28 as a configuration for obtaining the second estimated value M3 from the first estimated values M1 and M2.

The relational information generation unit 26 generates relational information defining the relationship between an appropriate correction amount and the difference between the first estimated value M1 and the first estimated value M2. The appropriate correction amount is a correction amount (that is, "true mass value - first estimated value M1" or "true mass value - first estimated value M2") for filling a difference between a first estimated value (first estimated value M1 or first estimated value M2) for one energy band and a true mass value of article G.

The relational information generation unit 26 generates relational information based on measurement values of a plurality of samples that are articles of the same type as the article G to be inspected. For example, the relational information generation unit 26 obtains the true mass value Mr, and the first estimated value M1 and the first estimated value M2 obtained by the first estimation unit 25 for each sample. Then, the relational information generation unit 26 obtains sample data S for each sample. The sample data S includes a difference between the first estimated value M1 and the first estimated value M2 (here, as an example, "first estimated value M2 - first estimated value M1") as an explanatory variable and includes an appropriate correction amount (here, as an example, "mass value Mr - first estimated value M1") as an objective variable. Then, the relational information generation unit 26 performs machine learning using such sample data S as training data to obtain the relational information as a learned model.

As shown in FIG. 5, in the present embodiment, as an example, the relational information generation unit 26 executes regression analysis (here, as an example, linear regression) based on a plurality of sample data S as the machine learning, thereby obtaining a regression equation R (regression line) shown in the following equation (2) as a learned model. In the following equation (2), "X" is an explanatory variable corresponding to the difference "first estimated value M2 - first estimated value M1". "Y" is an objective variable corresponding to the appropriate correction amount "mass value Mr - first estimated value M1". "A" is a parameter indicating the slope of the regression equation R. "B" is a parameter indicating an intercept of the regression equation R. In this case, the combination of the parameters A and B of the regression equation R corresponds to the parameters constituting the learned model.

$$Y = AX + B \quad \ldots(2)$$

The relational information generated by the relational information generation unit 26 is stored in the relational information storage unit 27 so as to be referable from the second estimation unit 28 described later.

The second estimation unit 28 obtains a second estimated value M3 of the mass of the article G based on the first estimated values for each energy band. When a plurality of articles G are included in the X-ray transmission image as in the example of FIG. 4, the second estimation unit 28 obtains the second estimated value M3 for each article G by referring to the result of the labeling processing of the recognition unit 22. That is, similarly to the first estimation unit 25, the second estimation unit 28 repeats the process of selecting one article G (target article) to be estimated and obtaining the second estimated value M3 of the target article until the second estimated value M3 of each of the plurality of articles G is obtained. Hereinafter, a process of obtaining the second estimated value M3 of the target article will be described.

The second estimation unit 28 obtains a second estimated value M3 of the target article based on the first estimated value M1 for the low energy band and the first estimated value M2 for the high energy band of the target article. Specifically, the second estimation unit 28 obtains the correction amount for the first estimated value M1 corresponding to one energy band (low energy band in the present embodiment) of the plurality of energy bands based on the difference between the first estimated values M1 and M2 for each energy band ("first estimated value M2 - first estimated value M1" in the present embodiment). Then, the second estimation unit 28 obtains a second estimated value M3 by correcting the first estimated value M1 corresponding to the low energy band based on the correction amount.

In the present embodiment, the second estimation unit 28 obtains an appropriate correction amount corresponding to the difference "first estimated value M2 - first estimated value M1" as the correction amount by using the relational information (regression equation R) stored in the relational information generation unit 26. Specifically, the second estimation unit 28 inputs the difference "first estimated value M2 - first estimated value M1" to the explanatory variable X of the regression equation R represented by the above equation (2), thereby obtaining the objective variable Y output by the regression equation R (that is, the estimated value of the appropriate correction amount) as the correction amount. Then, the second estimation unit 28 obtains a second estimated value M3 by adding the correction amount to the first estimated value M1.

The determination unit 29 determines whether or not the second estimated value M3 of the article G obtained by the second estimation unit 28 is within a predetermined proper range. Here, when the proper range of the mass value is determined in advance for each article G, the determination unit 29 may determine whether or not the second estimated value M3 is within the proper range for each article G. Then, the determination unit 29 may determine an article G whose second estimated value M3 is not within the proper range as a defective product. Such a determination result is notified to, for example, the above-described sorting device (not illustrated). As a result, the article G that has been determined to be a defective product by the determination unit 29 can be appropriately sorted out of the production line by the sorting device.

In addition, in a case where a proper range of the mass value in a product unit in which a plurality of articles G are collected as a packaged product is determined in advance, the determination unit 29 may calculate a sum of the second estimated values M3 of the plurality of articles G and determine whether the sum is within the proper range. Then, the determination unit 29 may determine that a product whose sum is not within the proper range is a defective product. In this case, it is possible to perform the sorting control by the above-described sorting device for each product including a plurality of articles G.

Next, an example of the operation of the X-ray inspection apparatus 1 will be described with reference to FIG. 6. The process of step S1 is a process for preparing information (conversion table and relational information) necessary for obtaining the final estimated value (second estimated value M3) of the mass of the article G to be inspected. The processing of steps S2 to S8 is processing for obtaining the second estimated value M3 of the article G to be inspected. If there are a plurality of articles G, each article G corresponds to the article G to be inspected. The process of step S9 is a process of determining the quality of the article G based on the second estimated value M3. The process of step S1 may be executed only when the conversion table and the relational information are not prepared, and may be omitted when the conversion table and the relational information are already stored in the conversion table storage unit 24 and the relational information storage unit 27. The processing in each step will be described below.

In step S1, a conversion table (in this embodiment, conversion table m1(a) for low energy image P1 and conversion table m2(a) for high energy image P2) and relational information (in this embodiment, regression equation R shown in Equation (2)) are generated. Specifically, the conversion table generation unit 23 generates the conversion table m1(a) and the conversion table m2(a) based on the low energy image P1 and the high energy image P2 for a plurality of articles (articles of the same type as the article G to be inspected) of which the masses are grasped in advance. The generated conversion table m1(a) and the generated conversion table m2(a) are stored in the conversion table storage unit 24. Further, the relational information generation unit 26 generates relational information based on the measurement values (mass value Mr, first estimated value M1, and first estimated value M2) of a plurality of samples which are the same type of article as the article G to be inspected. The generated relational information is stored in the relational information storage unit 27.

In step S2, the article G to be inspected is carried into the inspection region R from the carry-in conveyor 51 via the carry-in port 4a (see FIG. 1). Then, the X-ray emitter 6 emits an X-ray onto the article G, and the X-ray detector 7 detects respective X-rays in a plurality of energy bands transmitted through the article G. In the present embodiment, the first line sensor 11 of the X-ray detector 7 detects an X-ray in the low energy band, and the second line sensor 12 of the X-ray detector 7 detects an X-ray in the high energy band (see FIG. 2).

In step S3, the generation unit 21 generates a low energy image P1 based on the detection result of the X-ray in the low energy band by the first line sensor 11, and generates a high energy image P2 based on the detection result of the X-ray in the high energy band by the second line sensor 12 (see FIG. 4).

In step S4, the recognition unit 22 performs labeling processing on the X-ray transmission images (low energy image P1 and high energy image P2). Accordingly, when a plurality of articles G are included in the X-ray transmission image, the plurality of articles G included in the X-ray transmission image are distinguished and recognized.

In step S5, the first estimation unit 25 selects a target article from the articles G included in the X-ray transmission image by referring to the result of the labeling processing by the recognition unit 22.

In step S6, the first estimation unit 25 obtains the first estimated value M1 of the mass of the target article by using the conversion table m1(a) for the low energy image P1, and obtains the first estimated value M2 of the mass of the target article by using the conversion table m2(a) for the high energy image P2.

In step S7, the second estimation unit 28 obtains a second estimated value M3 of the mass of the target article based on the first estimated value M1 and the first estimated value M2 of the target article, and the relational information. In the present embodiment, the second estimation unit 28 calculates a difference "first estimated value M2 - first estimated value M1" between the first estimated value M1 and the first estimated value M2, and inputs the difference to the explanatory variable X of the regression equation R represented by the above equation (2), thereby obtaining the objective variable Y output by the regression equation R as the correction amount. Then, the second estimation unit 28 obtains a second estimated value M3 by adding the correction amount to the first estimated value M1.

The processes of the first estimation unit 25 and the second estimation unit 28 in steps S5 to S7 are repeatedly executed until the second estimated value M3 is obtained for all the articles G included in the X-ray transmission image (step S8: NO). When the second estimated value M3 is obtained for all the articles G included in the X-ray transmission image (step S8: YES), the processes of the first estimation unit 25 and the second estimation unit 28 are completed.

In step S9, the determination unit 29 performs quality determination for each article G or quality determination for each product including a plurality of articles G based on the second estimated value M3 of the article G obtained by the second estimation unit 28. As described above, the determination result by the determination unit 29 can be used for sorting control by a sorting device (not illustrated) disposed downstream of the carry-out conveyor 52.

The X-ray inspection apparatus 1 described above obtains the first estimated values M1 and M2 of the mass of the article G for each energy band based on the X-ray transmission images (in the present embodiment, the low energy image P1 and the high energy image P2) obtained for each of the plurality of energy bands. Then, the X-ray inspection apparatus 1 obtains the second estimated value M3 of the mass of the article G based on the first estimated values M1 and M2 for the plurality of energy bands. Accordingly, an estimated value (second estimated value M3) in which the ratio of the plurality of ingredients included in the article G is indirectly considered based on the first estimated values M1 and M2 for the plurality of energy bands is obtained as a final estimated value. Therefore, according to the X-ray inspection apparatus 1, it is possible to accurately estimate the mass of the article G containing a plurality of ingredients having different X-ray characteristics. Further, in the X-ray inspection apparatus 1, since it is not necessary to concretely specify the ratio of the plurality of ingredients included in the article G, it is possible to save computational resources such as a computer and to increase the processing speed.

Further, the second estimation unit 28 obtains a correction amount for the first estimated value M1 corresponding to one energy band (low energy band in the present embodiment) of the plurality of energy bands on the basis of the difference between the first estimated values M1 and M2 for each energy band ("first estimated value M2 - first estimated value M1" in the present embodiment). Then, the second estimation unit 28 obtains the second estimated value M3 by correcting the first estimated value M1 based on the correction amount. Accordingly, the mass of the article G can be accurately estimated based on the correlation between the difference between the first estimated values M1 and M2 for each energy band and the error from the true mass value of the first estimated value M1 corresponding to the one energy band.

In addition, the second estimation unit 28 obtains, as the correction amount, the appropriate correction amount corresponding to the difference between the first estimated values M1 and M2 for each energy band by using the relational information defining the relationship between the difference between the first estimated values M1 and M2 for each energy band and the appropriate correction amount. According to this, the final estimated value (second estimated value M3) of the mass of the article G can be easily obtained by using the relational information prepared in advance.

In addition, the relational information is a learned model (in the present embodiment, the regression equation R represented by the above Expression (2)) generated by machine learning (in the present embodiment, linear regression analysis) using training data including a difference between the first estimated values M1 and M2 for each energy band and an appropriate correction amount for each of a plurality of samples which are articles of the same type as the article G to be inspected. Then, the second estimation unit 28 obtains the estimated value of the appropriate correction amount output by the relational information as the correction amount by inputting the difference between the first estimated values M1 and M2 for each energy band to the relational information. According to this, by using, as relational information, a learned model prepared in advance based on training data for a plurality of samples which are articles of the same type as the article G to be inspected, it is possible to easily and accurately obtain the final estimated value (second estimated value M3) of the mass of the article G.

The X-ray inspection apparatus 1 includes a determination unit 29 that determines whether or not the second estimated value M3 is within a predetermined proper range. According to this, it is possible to determine the quality of the article G based on the final estimated value (second estimated value M3) of the mass of the article G. Such a determination result can be suitably used for, for example, sorting of the article G (for example, excluding the article G for which it is determined that the second estimated value M3 is not within the proper range) in a subsequent step.

In addition, the X-ray inspection apparatus 1 includes a recognition unit 22 that distinguishes and recognizes a plurality of articles G by labeling processing when the plurality of articles G are included in the X-ray transmission image. Then, the first estimation unit 25 obtains the first estimated values M1 and M2 for each article G, and the second estimation unit 28 obtains the second estimated value M3 for each article G. Accordingly, in a case where a plurality of articles G are included in the X-ray transmission image, the mass of each article G can be accurately estimated.

Although an embodiment of the present disclosure has been described above, the present disclosure is not limited to the above-described embodiment.

For example, in the above-described embodiment, a regression equation (regression equation R) obtained by linear regression analysis, which is a kind of machine learning, is shown as an example of relational information. However, the relational information may be a learned model obtained by machine learning other than linear regression analysis. For example, the relational information may be a learned model obtained by nonlinear regression analysis. That is, in the above embodiment, a model obtained by curve-approximating the relationship between the difference "first estimated value M2 - first estimated value M1", which is an explanatory variable, and the appropriate correction amount may be used as the relational information. The relational information may be a learned model generated by machine learning (for example, deep learning or the like) using training data including arbitrary information other than the difference "first estimated value M2 - first estimated value M1" described above as an explanatory variable. Alternatively, the relational information may be information obtained by a method other than machine learning. For example, the relational information may be table information in which a specific correction amount is associated with each specific range of the difference (for example, information defining a correspondence relationship in which a correction amount "+1" is associated with a difference range "1 or more and less than 2" and a correction amount "+2" is associated with a difference range "2 or more and less than 3"). Such table information may be manually created in advance by an operator or the like.

In the above embodiment, the second estimated value M3 is obtained based on the first estimated values M1 and M2 for two energy bands (low energy band and high energy band), but the second estimated value M3 may be calculated based on the first estimated values for three or more energy bands. For example, when three energy bands are used, the first estimation unit 25 can obtain a first estimated value M11 for the first energy band, a first estimated value M12 for the second energy band, and a first estimated value M13 for the third energy band. In this case, two values of "first estimated value M12 - first estimated value M11" and "first estimated value M13 - first estimated value M11" are obtained as the difference between the first estimated values for each of the plurality of energy bands based on the first estimated value M11. In this case, it is possible to use, as relational information, a learned model generated by machine learning based on training data including two explanatory variables and an appropriate correction amount "true mass value Mr - first estimated value M11" as an objective variable. As described above, when three or more energy bands are used, it is possible to increase information (a difference between first estimated values) that can be included in the explanatory variable, and thus it is possible to more accurately estimate the second estimated value M3 of the target article.

In the above-described embodiment, as an example of relational information, a learned model generated by machine learning using training data including the difference between first estimated values "first estimated value M2 - first estimated value M1" as an explanatory variable and including the appropriate correction amount "true mass value Mr - first estimated value M1" as an objective variable is described. However, for example, in the case of executing machine learning (for example, deep learning or the like) capable of automatically extracting a feature amount, it is possible to appropriately perform learning without explicitly giving a difference between first estimated values and an appropriate correction amount as a feature amount (explanatory variable, objective variable). In such a case, the relational information generation unit 26 may generate, as the relational information, an estimation model (learned model) generated by machine learning using training data including first estimated values M1 and M2 for each energy band and a mass value Mr of a sample for each of a plurality of samples that are articles of the same type as the article G to be inspected. More specifically, the relational information may be an estimation model that is machine-learned using training data including the first estimated values M1 and M2 of the sample as an explanatory variable and including the true mass value Mr of the sample as an objective variable. In this case, the second estimation unit 28 may obtain the estimated value of the mass of the article output by the estimation model as the second estimated value M3 by inputting the first estimated values M1 and M2 for each energy band of the target article to the estimation model. According to this, a final estimated value (second estimated value M3) of the mass of the article can be easily obtained only by inputting a plurality of first estimated values M1 and M2 obtained for each energy band to the estimation model.

In the above embodiment, the determination unit 29 performs the quality determination based on the second estimated value M3. However, the second estimated value M3 may be used for other purposes.

Here, as described above, the second estimated value M3 in which the ingredient ratio of the article is indirectly considered has higher estimation accuracy than the conventional mass estimated value (that is, the first estimated value M1 or the first estimated value M2). Therefore, the second estimated value M3 may be used for various controls (for example, a flow rate control for monitoring and adjusting the flow rate of the article G flowing through the belt conveyor) based on a high-precision mass estimation result.

In the above-described embodiment, the difference "first estimated value M2 - first estimated value M1" between the first estimated values is used as the parameter based on the comparison between the first estimated values for each energy band, but the parameter is not limited to the difference between the first estimated values. For example, the parameter may be a ratio between first estimated values (e.g., first estimated value M1 / first estimated value M2). That is, the parameter may be a value obtained by comparing first estimated values of a plurality of energy bands. In addition, in the above embodiment, the appropriate correction amount and the correction amount are parameters for obtaining the second estimated value M3 by adding to the first estimated value (the first estimated value M1 in the above embodiment) of one energy band. However, the present invention is not limited to the above. For example, the appropriate correction amount and the correction amount may be parameters for obtaining the second estimated value M3 by multiplying with the first estimated value.

### Reference Signs List

1 X-ray inspection apparatus
6 X-ray emitter (emitter)
7 X-ray detector (detector)
21 generation unit
22 recognition unit
25 first estimation unit
28 second estimation unit
29 determination unit
G article
P1 low energy image (X-ray transmission image)
P2 high energy image (X-ray transmission image).

### Claims

1. An X-ray inspection apparatus (1) comprising:

    an emitter (6) configured to emit an X-ray onto an article;
    a detector (7) configured to detect respective X-rays in a plurality of energy bands transmitted through the article; and
    a generation unit (21) configured to generate respective X-ray transmission images for each energy band based on a detection result of the X-ray for each energy band;
**characterized by**
a first estimation unit (25) configured to obtain respective first estimated values of a mass of the article for each energy band based on the X-ray transmission image for each energy band; and
a second estimation unit (28) configured to obtain a second estimated value of the mass of the article based on the first estimated values for each energy band;
wherein the second estimation unit (28) is configured to:

    obtain a correction amount for the first estimated value corresponding to one energy band of the plurality of energy bands on the basis of a parameter based on a comparison between the first estimated values for each energy band; and
    correct the first estimated value corresponding to the one energy band based on the correction amount to obtain the second estimated value.

2. The X-ray inspection apparatus (1) according to claim 1, wherein
the second estimation unit (28) is configured to obtain, as the correction amount, an appropriate correction amount corresponding to a parameter that is based on the comparison between the first estimated values for each energy band by using a relational information defining a relationship between the parameter and the appropriate correction amount.

3. The X-ray inspection apparatus (1) according to claim 2, wherein

    the relational information is a learned model generated by machine learning using training data including a parameter that is based on a comparison between the first estimated values for each energy band for each of a plurality of samples that are articles of the same type as the article and an appropriate correction amount, and
    the second estimation unit (28) is configured to obtain, as the correction amount, an estimated value of the appropriate correction amount output from the relational information by inputting a parameter that is based on a comparison between the first estimated values for each energy band to the relational information.

4. An X-ray inspection apparatus (1) comprising:

    an emitter (6) configured to emit an X-ray onto an article;

a detector (7) configured to detect respective X-rays in a plurality of energy bands transmitted through the article; and

a generation unit (21) configured to generate respective X-ray transmission images for each energy band based on a detection result of the X-ray for each energy band;

**characterized by**

a first estimation unit (25) configured to obtain respective first estimated values of a mass of the article for each energy band based on the X-ray transmission image for each energy band; and

a second estimation unit (28) configured to obtain a second estimated value of the mass of the article based on the first estimated values for each energy band;

wherein

the second estimation unit (28) is configured to obtain, as the second estimated value, an estimated value of the mass of the article output from an estimation model by inputting the first estimated values for each energy band to the estimation model, and

the estimation model is a learned model generated by machine learning using training data including the first estimated values for each energy band and the mass value of the sample for each of a plurality of samples that are articles of the same type as the article.

5. The X-ray inspection apparatus (1) according to any one of claims 1 to 4, further comprising a determination unit configured to determine whether the second estimated value is within a predetermined proper range.

6. The X-ray inspection apparatus (1) according to any one of claims 1 to 5, further comprising a recognition unit configured to distinguish and recognize a plurality of articles by labeling processing when the X-ray transmission image includes the plurality of articles, wherein

the first estimation unit (25) is configured to obtain the first estimated value for each article, and

the second estimation unit (28) is configured to obtain the second estimated value for each article.

**Patentansprüche**

1. Röntgenstrahl-Prüfvorrichtung (1), die aufweist:

einen Emitter (6), der konfiguriert ist, Röntgenstrahlen auf einen Artikel zu emittieren;

einen Detektor (7), der konfiguriert ist, jeweilige Röntgenstrahlen in mehreren Energiebändern zu detektieren, die durch den Artikel durchgelassen werden; und

eine Erzeugungseinheit (21), die konfiguriert ist, jeweilige Röntgenstrahl-Transmissionsbilder für jedes Energieband basierend auf einem Detektionsergebnis der Röntgenstrahlung für jedes Energieband zu erzeugen;

**gekennzeichnet durch**

eine erste Schätzeinheit (25), die konfiguriert ist, jeweilige erste Schätzwerte einer Masse des Artikels für jedes Energieband basierend auf dem Röntgenstrahl-Transmissionsbild für jedes Energieband zu erhalten; und

eine zweite Schätzeinheit (28), die konfiguriert ist, einen zweiten Schätzwert der Masse des Artikels basierend auf den ersten Schätzwerten für jedes Energieband zu erhalten;

wobei die zweite Schätzeinheit (28) konfiguriert ist, um:

einen Korrekturbetrag für den ersten Schätzwert entsprechend einem Energieband der mehreren Energiebänder auf der Grundlage eines Parameters basierend auf einem Vergleich zwischen den ersten Schätzwerten für jedes Energieband zu erhalten; und

den ersten Schätzwert entsprechend dem einen Energieband basierend auf dem Korrekturbetrag zu korrigieren, um den zweiten Schätzwert zu erhalten.

2. Röntgenstrahl-Prüfvorrichtung (1) nach Anspruch 1, wobei

die zweite Schätzeinheit (28) konfiguriert ist, als Korrekturbetrag einen geeigneten Korrekturbetrag zu erhalten, der einem Parameter entspricht, der auf dem Vergleich zwischen den ersten Schätzwerten für jedes Energieband unter Verwendung relationalen Informationen basiert, die eine Beziehung zwischen dem Parameter und dem geeigneten Korrekturbetrag definieren.

3. Röntgenstrahl-Prüfvorrichtung (1) nach Anspruch 2, wobei

die relationale Informationen ein erlerntes Modell sind, das durch maschinelles Lernen unter Verwendung von Trainingsdaten erzeugt wird, die einen Parameter enthalten, der auf einem Vergleich zwischen den ersten Schätzwerten für jedes Energieband für jede von mehreren Proben, die Artikel des gleichen Typs wie der Artikel sind, und einem geeigneten Korrekturbetrag basiert, und

die zweite Schätzeinheit (28) konfiguriert ist, als Korrekturbetrag einen Schätzwert des geeigneten Korrekturbetrags zu erhalten, der von den relationalen Informationen ausgegeben wird, indem ein Parameter eingegeben wird, der auf einem Vergleich zwischen den ersten Schätzwerten für jedes Energieband mit den relationalen Informationen basiert.

4. Röntgenstrahl-Prüfvorrichtung (1), die aufweist:

einen Emitter (6), der konfiguriert ist, Röntgenstrahlen auf einen Artikel zu emittieren;
einen Detektor (7), der konfiguriert ist, jeweilige Röntgenstrahlen in mehreren Energiebändern zu detektieren, die durch den Artikel durchgelassen werden; und
eine Erzeugungseinheit (21), die konfiguriert ist, jeweilige Röntgenstrahl-Transmissionsbilder für jedes Energieband basierend auf einem Detektionsergebnis der Röntgenstrahlung für jedes Energieband zu erzeugen;
**gekennzeichnet durch**
eine erste Schätzeinheit (25), die konfiguriert ist, jeweilige erste Schätzwerte einer Masse des Artikels für jedes Energieband basierend auf dem Röntgenstrahl-Transmissionsbild für jedes Energieband zu erhalten; und
eine zweite Schätzeinheit (28), die konfiguriert ist, einen zweiten Schätzwert der Masse des Artikels basierend auf den ersten Schätzwerten für jedes Energieband zu erhalten;
wobei
die zweite Schätzeinheit (28) konfiguriert ist, als zweiten Schätzwert einen Schätzwert der Masse des Artikels zu erhalten, der von einem Schätzmodell ausgegeben wird, indem die ersten Schätzwerte für jedes Energieband in das Schätzmodell eingegeben werden, und
das Schätzmodell ein erlerntes Modell ist, das durch maschinelles Lernen unter Verwendung von Trainingsdaten erzeugt wird, die die ersten Schätzwerte für jedes Energieband und den Massenwert der Probe für jede von mehreren Proben enthalten, die Artikel des gleichen Typs wie der Artikel sind.

5. Röntgenstrahl-Prüfvorrichtung (1) nach einem der Ansprüche 1 bis 4, die ferner eine Bestimmungseinheit aufweist, die konfiguriert ist, zu bestimmen, ob der zweite Schätzwert innerhalb eines vorbestimmten geeigneten Bereichs liegt.

6. Röntgenstrahl-Prüfvorrichtung (1) nach einem der Ansprüche 1 bis 5, die ferner eine Erkennungseinheit aufweist, die konfiguriert ist, mehrere Artikel durch Kennzeichnungsverarbeitung zu unterscheiden und zu erkennen, wenn das Röntgenstrahl-Transmissionsbild die mehreren Artikel enthält,

wobei

die erste Schätzeinheit (25) konfiguriert ist, den ersten Schätzwert für jeden Artikel zu erhalten, und
die zweite Schätzeinheit (28) konfiguriert ist, den zweiten Schätzwert für jeden Artikel zu erhalten.

**Revendications**

1. Dispositif d'inspection par rayons X (1), comprenant :

un émetteur (6) prévu pour émettre un rayonnement X vers un article ;
un détecteur (7) prévu pour détecter des rayons X respectifs dans une pluralité de bandes d'énergie transmises à travers l'article ; et
une unité de génération (21) prévue pour générer des images de transmission de rayons X respectifs pour chaque bande d'énergie sur la base d'un résultat de détection des rayons X pour chaque bande d'énergie ;
**caractérisé par**
une première unité d'estimation (25) prévue pour obtenir des premières valeurs estimées respectives d'une masse de l'article pour chaque bande d'énergie sur la base de l'image de transmission de rayons X pour chaque bande d'énergie ; et
une deuxième unité d'estimation (28) prévue pour obtenir une deuxième valeur estimée de la masse de l'article sur la base des premières valeurs estimées pour chaque bande d'énergie ;
où la deuxième unité d'estimation (28) est prévue pour :

obtenir un montant de correction pour la première valeur estimée correspondant à une bande d'énergie de la pluralité de bandes d'énergie sur la base d'un paramètre basé sur une comparaison entre les premières valeurs estimées pour chaque bande d'énergie ; et
corriger la première valeur estimée correspondant à une bande d'énergie sur la base du montant de correction pour obtenir la deuxième valeur estimée.

2. Dispositif d'inspection par rayons X (1) selon la revendication 1, où
la deuxième unité d'estimation (28) est prévue pour obtenir, en tant que montant de correction, un montant de correction approprié correspondant à un paramètre basé sur la comparaison entre les premières valeurs estimées pour chaque bande d'énergie au moyen d'une information relationnelle définissant une relation entre le paramètre et le montant de correction approprié.

3. Dispositif d'inspection par rayons X (1) selon la revendication 2, où l'information relationnelle est un modèle appris généré par apprentissage automatique au moyen de données d'entraînement comprenant un paramètre basé sur une comparaison entre les premières valeurs estimées pour chaque bande d'énergie pour chaque échantillon d'une pluralité d'échantillons étant des articles du même type que l'article et un montant de correction approprié, et où la deuxième unité d'estimation (28) est prévue pour obtenir, en tant que montant de correction, une valeur estimée du montant de correction approprié issu des informations relationnelles par entrée d'un paramètre basé sur une comparaison entre les premières valeurs estimées pour chaque bande d'énergie et les informations relationnelles.

4. Dispositif d'inspection par rayons X (1), comprenant :

un émetteur (6) prévu pour émettre un rayonnement X vers un article ;
un détecteur (7) prévu pour détecter des rayons X respectifs dans une pluralité de bandes d'énergie transmises à travers l'article ; et
une unité de génération (21) prévue pour générer des images de transmission de rayons X respectifs pour chaque bande d'énergie sur la base d'un résultat de détection des rayons X pour chaque bande d'énergie ;
**caractérisé par**
une première unité d'estimation (25) prévue pour obtenir des premières valeurs estimées respectives d'une masse de l'article pour chaque bande d'énergie sur la base de l'image de transmission de rayons X pour chaque bande d'énergie ; et
une deuxième unité d'estimation (28) prévue pour obtenir une deuxième valeur estimée de la masse de l'article sur la base des premières valeurs estimées pour chaque bande d'énergie ;
où
la deuxième unité d'estimation (28) est prévue pour obtenir, en tant que deuxième valeur estimée, une valeur estimée de la masse de l'article issue d'un modèle d'estimation par entrée des premières valeurs estimées pour chaque bande d'énergie dans le modèle d'estimation, et où le modèle d'estimation est un modèle appris généré par apprentissage automatique au moyen de données d'apprentissage comprenant les premières valeurs estimées pour chaque bande d'énergie et la valeur de masse de l'échantillon pour chaque échantillon d'une pluralité d'échantillons étant des articles du même type que l'article.

5. Dispositif d'inspection par rayons X (1) selon l'une des revendications 1 à 4, comprenant en outre une unité de détermination prévue pour déterminer si la deuxième valeur estimée est comprise dans une plage appropriée prédéterminée.

6. Dispositif d'inspection par rayons X (1) selon l'une des revendications 1 à 5, comprenant en outre une unité de reconnaissance prévue pour distinguer et reconnaître une pluralité d'articles par traitement d'étiquetage lorsque l'image de transmission de rayons X comprend la pluralité d'articles, où

la première unité d'estimation (25) est prévue pour obtenir la première valeur estimée pour chaque article, et
la deuxième unité d'estimation (28) est prévue pour obtenir la deuxième valeur estimée pour chaque article.

*Fig.1*

*Fig.2*

*Fig.3*

10

21 GENERATION UNIT

22 RECOGNITION UNIT

23 CONVERSION TABLE GENERATION UNIT

24 CONVERSION TABLE STORAGE UNIT

25 FIRST ESTIMATION UNIT

26 RELATIONAL INFORMATION GENERATION UNIT

27 RELATIONAL INFORMATION STORAGE UNIT

28 SECOND ESTIMATION UNIT

29 DETERMINATION UNIT

# Fig.4

(A)

P1

(B)

P2

# Fig.5

# Fig.6

```
                    ┌─────────────┐
                    │    START    │
                    └──────┬──────┘
                           │
   ┌───────────────────────────────────────────┐
   │   GENERATE CONVERSION TABLE AND            │ ~S1
   │      RERATIONAL INFORMATIN                 │
   └───────────────────────┬───────────────────┘
                           │
   ┌───────────────────────────────────────────┐
   │  EMIT AN X-RAY ONTO ARTICLE TO BE          │
   │  INSPECTED, AND DETECT RESPECTIVE          │ ~S2
   │  X-RAYS FOR LOW ENERGY BAND AND            │
   │  HIGH ENERGY BAND                          │
   └───────────────────────┬───────────────────┘
                           │
   ┌───────────────────────────────────────────┐
   │   OBTAIN LOW ENERGY IMAGE                  │ ~S3
   │   AND HIGH ENERGY IMAGE                    │
   └───────────────────────┬───────────────────┘
                           │
   ┌───────────────────────────────────────────┐
   │   LABELING PROCESSING                      │ ~S4
   └───────────────────────┬───────────────────┘
                           │
   ┌───────────────────────────────────────────┐
   │   SELECT A TARGET ARTICLE                  │ ~S5
   └───────────────────────┬───────────────────┘
                           │
   ┌───────────────────────────────────────────┐
   │  OBTAIN FIRST ESTIMATED VALUES M1, M2      │
   │  OF MASS OF THE TARGET ARTICLE FROM        │ ~S6
   │  LOW ENERGY IMAGE AND HIGH ENERGY          │
   │  IMAGE BY USING CONVERSION TABLE           │
   └───────────────────────┬───────────────────┘
                           │
   ┌───────────────────────────────────────────┐
   │  OBTAIN SECOND ESTIMAGED VALUE M3 OF       │
   │  MASS OF THE TARGET ARTICLE BASED ON       │ ~S7
   │  FIRST ESTIMAGED VALUES M1, M2 AND         │
   │  RELATIONAL INFORMATION                    │
   └───────────────────────┬───────────────────┘
                           │
                       ◇ S8
              HAS SECOND ESTIMATED VALUE     NO
              M3 BEEN OBTAINED FOR      ──────────┐
              ALL THE ARTICLES?                   │
                           │ YES                  │
   ┌───────────────────────────────────────────┐ │
   │  DETERMINATION PROCESSING BASED            │ ~S9
   │  ON SECOND ESTIMATED VALUE M3              │ │
   └───────────────────────┬───────────────────┘ │
                           │
                    ┌──────┴──────┐
                    │     END     │
                    └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3078944 A1
- JP 5297206 B

- JP 5148285 B